Europäisches Patentamt

European Patent Office

Office européen des brevets

(19)

(11) Numéro de publication : **0 008 791**
**B1**

(12) **FASCICULE DE BREVET EUROPÉEN**

(45) Date de publication du fascicule du brevet :
**01.06.83**

(21) Numéro de dépôt : **79103266.7**

(22) Date de dépôt : **04.09.79**

(51) Int. Cl.³ : **H 02 K 31/00,** H 02 K 31/04,
H 01 R 39/64

(54) Perfectionnement aux machines homopolaires à entrefer cylindrique.

(30) Priorité : **07.09.78 FR 7825728**

(43) Date de publication de la demande :
**19.03.80 Bulletin 80/06**

(45) Mention de la délivrance du brevet :
**01.06.83 Bulletin 83/22**

(84) Etats contractants désignés :
**CH DE GB IT SE**

(56) Documents cités :
**DE C 59 409**
**DE C 110 700**
**FR A 1 286 485**
**FR A 2 314 609**
**FR A 2 331 895**
**GB A 1 298 935**
**US A 1 916 256**
**US A 3 185 877**
**US A 3 648 088**

(73) Titulaire : **ANVAR Agence Nationale de Valorisation
de la Recherche
13, rue Madeleine Michelis
F-92522 Neuilly-sur-Seine (FR)**

(72) Inventeur : **Chabrerie, Jean-Pierre
140, allée de la Pointe Genete
F-91190 Gif Chevry (FR)**

(74) Mandataire : **Casalonga, Alain, et al
BUREAU D.A. CASALONGA OFFICE JOSSE & PETIT
Baaderstrasse 12-14
D-8000 München 5 (DE)**

Perfectionnement aux machines homopolaires à entrefer cylindrique.

L'invention concerne les machines homopolaires à entrefer cylindrique, c'est-à-dire du type tambour.

Dans les machines classiques de ce type, le courant d'induit circule dans le matériau ferromagnétique massif constituant le stator et le rotor. Ceci a pour conséquence essentielle de superposer aux deux composantes axiale et radiale du vecteur excitation magnétique créé en tout point du stator et du rotor par les ampères-tours inducteurs une composante orthoradiale créée par le courant d'induit. Les valeurs de ce courant d'induit couramment rencontrées dans ce type de machine, et qui sont de plusieurs dizaines de milliers d'ampères, superposent ainsi au champ magnétique inducteur un champ magnétique de réaction d'induit, perpendiculaire, et couramment de vingt à cent fois plus intense. Il en résulte une saturation magnétique du matériau dans la direction résultante sensiblement orthoradiale provoquant une diminution considérable de la composante utile de l'induction magnétique, d'où la limitation considérable des performances de la machine en charge.

Pour réduire cet effet nuisible, il est connu selon le brevet US 3 648 088 de séparer et d'isoler le circuit magnétique du circuit électrique en constituant ce dernier par des parois continues conductrices non magnétiques et de forme cylindrique qui referment le circuit sans enserrer de partie magnétique. Cependant cela augmente beaucoup l'entrefer, donc la force magnétomotrice nécessaire pour l'inducteur.

Selon le brevet US 1 916 256 l'entrefer se trouve encore accru du fait que la partie conductrice revêtant l'alésage intérieur du stator est composée de barres conductrices logées dans des encoches à la périphérie extérieure de deux bagues également conductrices et non magnétiques, ce qui augmente sensiblement l'épaisseur de l'intervalle sans fer.

Le brevet GB 1 298 935 élimine complètement tout circuit fer, ce qui supprime donc toute possibilité de saturation magnétique, mais au prix d'un inducteur supraconducteur, donc selon une technique très onéreuse.

Le brevet FR 1 286 485 décrit un appareil qui n'est pas une machine de conversion d'énergie électrique en énergie mécanique ou inversement, mais seulement un accumulateur d'énergie cinétique. Il ne comporte pas un, mais un grand nombre de rotors qui ne sont pas du type tambour mais du type disque, et qui tournent chacun dans un sens de rotation opposé à celui du disque suivant dans l'empilement. Des fentes sont prévues dans ces rotors, mais non dans le stator, et aucune partie fer ne pénètre dans ces fentes.

Enfin dans le brevet US 3 648 088 déjà cité il est également prévu une variante de réalisation selon laquelle la périphérie conductrice du rotor peut être constituée par des conducteurs individuels s'étendant axialement à la périphérie du rotor en tambour. Il n'est aucunement fait mention d'encoches dans ce rotor pour loger ces conducteurs. Cependant, même si l'on prévoyait de telles encoches pour réduire l'entrefer, comme dans les machines hétéropolaires, cela ne supprimerait absolument pas la génération des courants orthoradiaux exposée plus haut avec les mêmes conséquences.

Le but de l'invention est d'éliminer les inconvénients précédents en réalisant une machine homopolaire dont le courant d'induit ne produise pas de flux magnétique nuisible.

L'invention prévoit d'abord, d'une manière connue de concentrer la totalité des courants d'induit dans un circuit conducteur non magnétique et soigneusement isolé du circuit magnétique de la machine, ce circuit, qui inclut les couronnes de contact et les connexions extérieures, s'étendant par ailleurs sur les deux faces de l'entrefer cylindrique en regard sans enserrer de masse magnétique entre ses diverses parties à l'intérieur d'une section par un plan axial.

En outre, le circuit sur l'une et l'autre face de l'entrefer cylindrique est constitué par des barreaux conducteurs logés dans des encoches, les barreaux d'une des faces, par exemple du stator, étant disposés axialement tandis que les barreaux de l'autre face, c'est-à-dire du rotor dans le même exemple, sont disposés hélicoïdalement de manière à assurer une réluctance constante au cours de la rotation, et conformément à l'invention on dispose un autre jeu de barreaux hélicoïdaux inclinés dans le sens opposé et contigu aux précédents.

Selon une autre particularité de l'invention l'entrefer cylindrique comporte une forme légèrement étranglée dans le milieu de sa longueur, par exemple sous la forme de deux troncs de cône opposés par leur petite base, avec du côté de chaque grande base une nervure sur le rotor et une gorge correspondante sur le stator, de telle manière que la machine puisse démarrer en remplissage total et évoluer ensuite vers une machine à contacts mouillés localisés par le seul effet de la force centrifuge qui chasse le métal liquide utilisé pour le contact vers lesdites gorges au moyen d'un circuit approprié autorisant l'écoulement.

D'autres particularités de l'invention apparaîtront dans la description qui va suivre de diverses variantes de réalisation prises comme exemples et représentées sur le dessin annexé sur lequel :

la figure 1 représente en coupe axiale une vue schématique générale de la réalisation la plus simple selon l'état de la technique ;

les figures 2 et 3 sont des vues schématiques développées de deux variantes de disposition des barreaux ;

la figure 4 est une coupe axiale d'un mode de réalisation préférentiel ;

la figure 5 est une coupe axiale d'une variante de disposition du circuit magnétique, et

la figure 6 représente à plus grande échelle un fragment de la figure 4, montrant la réalisation des contacts localisés.

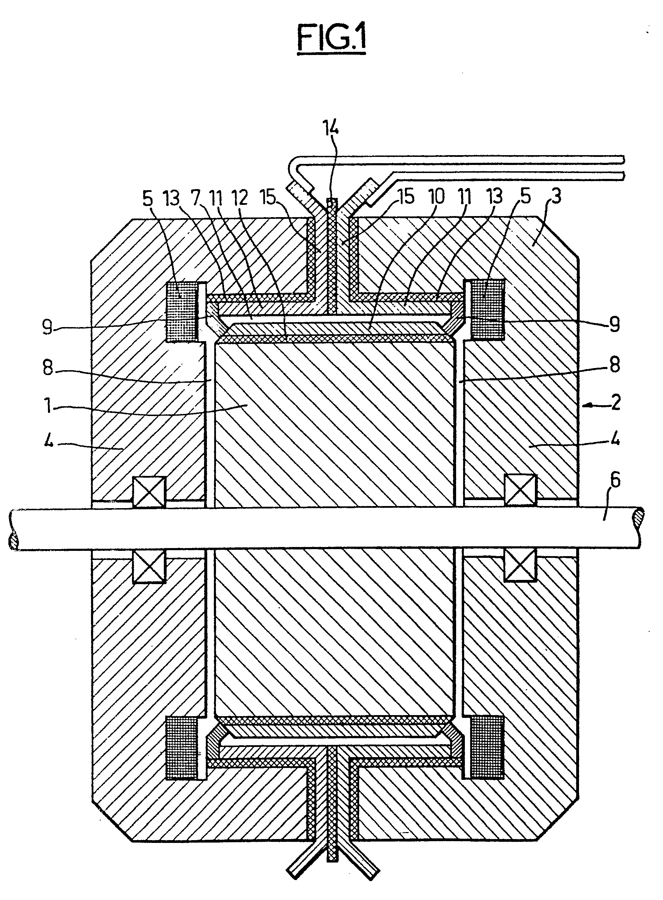

On voit sur la figure 1 la forme de réalisation la plus simple d'une machine homopolaire à entrefer cylindrique selon le brevet US 3 648 088. Cette machine comporte un rotor cylindrique 1 et un stator 2 comportant une partie périphérique 3 et des flasques 4. Des bobinages inducteurs 5 coaxiaux à l'arbre 6 produisent un flux magnétique important dans le circuit magnétique constitué par les parties 1, 3 et 4, qui sont naturellement en matériau à perméabilité magnétique élevée, et ce flux magnétique traverse à la fois l'entrefer cylindrique 7 en se partageant pour moitié dans chacun des entrefers plans 8.

Dans le type de machine considéré, on n'utilise que l'entrefer cylindrique 7 pour les effets électromagnétiques, et pour cela on dispose deux contacts glissants 9 le long des deux arêtes périphériques du cylindre 1 afin de créer des courants axiaux dans le rotor. Naturellement comme dans toute machine homopolaire, ces courants sont extrêmement intenses et risquent de provoquer des champs orthoradiaux (perpendiculaires au plan de la figure 1) beaucoup plus importants que le champ utile (dans le plan de la figure 1) produit par les inducteurs 5 ce qui entraîne la saturation magnétique du matériau et par suite l'affaiblissement considérable du flux inducteur utile responsable de la force électromotrice de ma machine.

Pour éviter ce phénomène, on réalise un circuit séparé dont les parties 10 et 11, en matériau bon conducteur et non magnétique, sont séparées des parties magnétiques 1, 3 et 4 par des couches d'isolant respectivement 12 et 13. La partie conductrice 10 s'étend à la périphérie du rotor 1 et la partie conductrice 11 s'étend sur la face intérieure de la périphérie 3 du stator. En outre, en un endroit quelconque de sa longueur, cette partie 11 comporte une coupure isolante 14 de part et d'autre de laquelle sont raccordés deux conducteurs de liaison 15 assurant les connexions avec le circuit extérieur, ces connexions 15 étant elles-mêmes isolées électriquement du circuit magnétique 3 du stator par des prolongements de la couche isolante 13.

Si l'on considère une section par un plan axial telle que celle de la figure 1 de ce circuit séparé 15-11-9-10-9-11-15, section à l'intérieur de laquelle la circulation des courants intéresse la composante orthoradiale des champs et des inductions magnétiques, on voit clairement que dans une telle section les lignes de courant se replient sur elles-mêmes sans enserrer aucune masse magnétique, ce qui évite par conséquent toute saturation magnétique en tout point du circuit magnétique.

Pour mettre en œuvre ce qui précède, l'idée la plus simple qui vienne à l'esprit est donc de réaliser les parties conductrices 10 et 11 sous forme de parois massives cylindriques coaxiales d'épaisseur constante séparées du circuit magnétique par un isolant également d'épaisseur constante. Pour cela, on réalise dans le stator un alésage cylindrique et on usine le rotor suivant une surface cylindrique, la différence des rayons de ces deux dernières surfaces étant égale au vide d'air 7 qui peut être réduit, mais majoré des épaisseurs des parties 10, 11, 12 et 13.

L'inconvénient de cette manière d'opérer est que pour la détermination des bobines inductrices 5, la force magnétomotrice à prévoir est fonction essentiellement des entrefers 8, qui peuvent être aussi réduits que possible en fonction des tolérances, et de l'entrefer réel entre 1 et 3 qui est la différence de rayons indiquée précédemment et qui est beaucoup plus grande et ne peut être réduite, compte tenu des sections de passage nécessaires pour le courant et des épaisseurs d'isolation.

Cependant, on sait que pour produire dans le circuit magnétique une induction maximum proche de la saturation il faut dans les inducteurs 5 un certain nombre d'ampères-tours, c'est-à-dire finalement une section totale de bobinage qui est parfaitement déterminée et ne dépend que faiblement des dimensions de l'appareil. En conséquence, l'inconvénient du surdimensionnement des inducteurs, auquel conduit la solution précédente à parois conductrices continues, revêt une importance relativement beaucoup moindre pour les machines de grandes dimensions qui peuvent ainsi facilement s'accommoder de cette solution simplifiée sans conduire relativement à des excès de section ou de consommation pour les inducteurs.

Au contraire pour les machines homopolaires de puissance modérée, le surdimensionnement des inducteurs prend une importance prépondérante et peut devenir rédhibitoire. Dans ce cas on a intérêt à utiliser la technique de l'encochage telle qu'elle est utilisée couramment avec les machines hétéropolaires. Cette technique consiste à utiliser pour l'alésage du stator 3 et la périphérie du rotor 1 une différence de rayons aussi réduite que possible et juste limitée à l'épaisseur d'air 7 strictement nécessaire et à pratiquer, aussi bien dans la masse du rotor que dans la masse du stator des encoches longitudinales pour loger les parties conductrices. On a ainsi à la périphérie une alternance de parties magnétiques et de parties conductrices.

Il est connu par ailleurs, toujours à propos des machines hétéropolaires, que pour assurer une constance de la réluctance magnétique entre le rotor et le stator il est nécessaire d'incliner les encoches de l'une par rapport à celles de l'autre, l'inclinaison étant telle qu'elle corresponde sur la hauteur complète du rotor à une rotation d'un pas d'encochage ou d'un multiple de ce pas.

Pour des raisons de pratique courante, on préfère disposer les encoches de stator parallèles à l'axe et les encoches de rotor hélicoïdales. Ceci est encore plus vrai dans le cas de l'invention où le rotor et le stator sont des pièces massives usinées et non pas des empilements de tôle comme avec des machines hétéropolaires. Or, il est plus difficile d'usiner des rainures hélicoïdales dans la paroi d'un alésage qu'à la périphérie d'un cylindre.

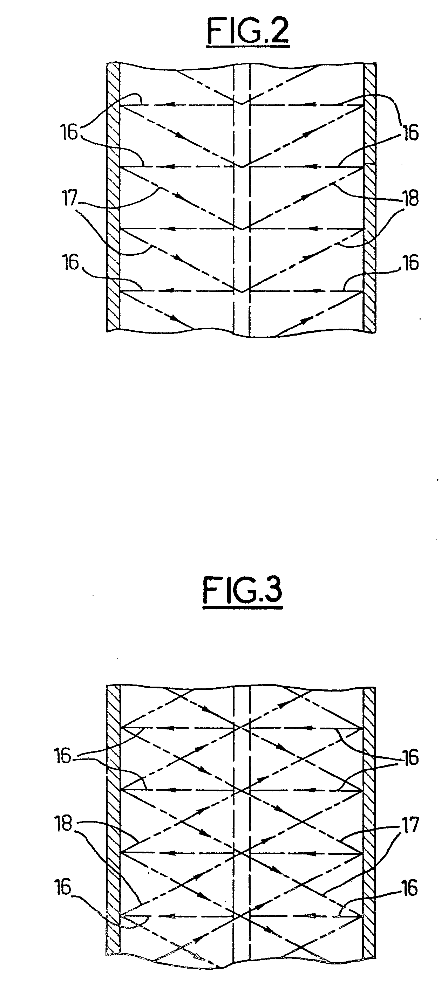

Pour simplifier l'exposé on supposera donc dans ce qui suit que les encoches de stator sont parallèles, comme désigné par 16 sur les figures 2 et 3, et que ce sont les encoches de rotor qui sont inclinées par rapport aux génératrices. Cependant si les encoches de rotor et par conséquent les barreaux conducteurs 17 qui y sont logés, sont uniformément inclinés comme avec un rotor à cage d'écureuil de moteur asynchrone classique, cela introduit à nouveau un grave inconvénient par le fait que les courants extrêmement intenses qui parcourent ces barreaux présentent, du fait de l'inclinaison de ces barreaux, une composante orthoradiale de courant qui présente des inconvénients non négligeables par le fait que le champ qu'elle crée s'oppose au champ produit par un des inducteurs 5 et renforce le champ produit par le second.

Pour remédier à ce dernier défaut on doit conformément à l'invention disposer une deuxième série de barreaux 18 de même section globale que la précédente et de même inclinaison mais de sens contraire. Les barreaux de ces deux séries peuvent être simplement juxtaposés comme dans l'exemple représenté sur la figure 2, ce qui suffit pour annuler la composante orthoradiale de courant. Mais ils peuvent également être superposés comme représenté sur la figure 3.

Dans ce dernier mode de réalisation, après avoir usiné les encoches hélicoïdales à pas contrariés à la périphérie d'un cylindre massif de fer doux constituant le rotor 1, il est avantageux d'enduire par projection l'intérieur des parois de ces encoches avec un isolant céramique ou alumineux résistant parfaitement à la température, puis de mouler par injection d'aluminium, de cuivre ou de bronze fondu l'ensemble des barreaux et des couronnes conductrices d'extrémité comme on réalise déjà des rotors à cage d'écureuil pour machines hétéropolaires pour lesquelles le problème de l'isolation ne se pose pas, le stator se réalise de la même façon mais avec des encoches droites. Naturellement si on le désire on peut également constituer le rotor ou le stator par un empilement de tôles à faible coefficient de foisonnement. Le feuilletage réduit alors les pertes de réluctance restantes mais augmente légèrement les ampères-tours inducteurs nécessaires.

Dans le cas où ce rotor doit pouvoir résister à une grande vitesse de rotation et afin de permettre aux barreaux de résister à la force centrifuge, on peut avantageusement donner à la section des encoches une forme en contre-dépouille, par exemple une section trapézoïdale avec la petite base tournée vers l'extérieur pour assurer une retenue des barreaux.

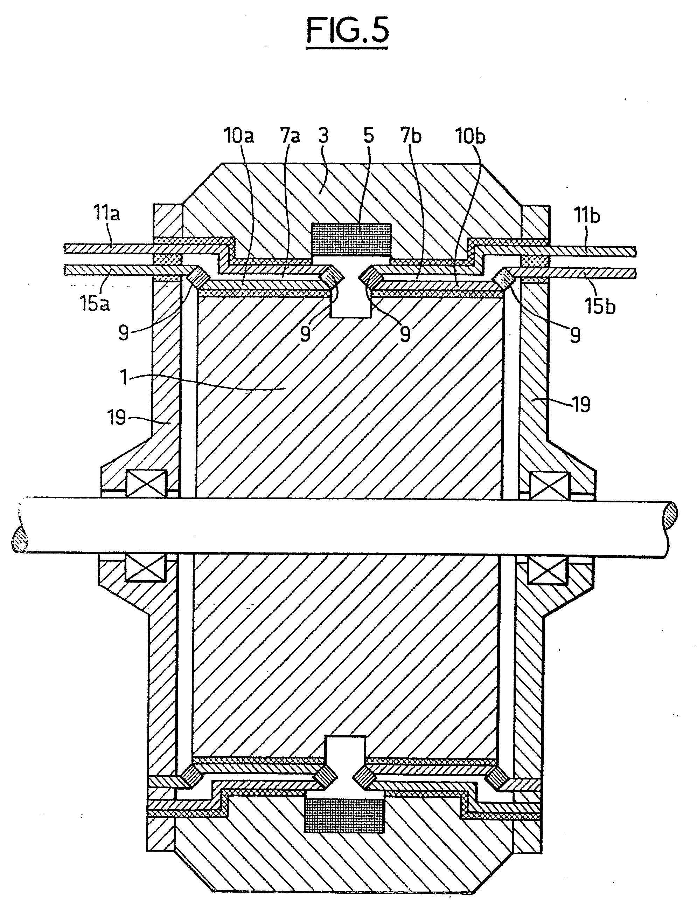

Tout ce qui précède concerne les machines homopolaires à entrefer cylindrique en général, c'est-à-dire les machines dans lesquelles le champ magnétique est radial sur toute l'étendue de l'entrefer cylindrique. Toutefois la forme du circuit magnétique produisant ce flux magnétique n'est pas forcément limitée à l'exemple représenté sur la figure 1. En effet malgré sa simplicité apparente ce circuit présente l'inconvénient que chaque ligne de flux traverse deux entrefers, dont un 7 utile comme on l'a vu et l'autre 8 nuisible, et d'autre part il nécessite une culasse ou flasque 4 de masse importante pour assurer le circuit magnétique de retour. Il existe cependant d'autres types de circuit magnétique parfaitement connus, comme celui représenté sur la figure 5, qui éliminent ces inconvénients. Dans ce circuit on a deux sections successives le long de l'axe fonctionnant avec un inducteur unique 5, les deux entrefers 7a et 7b de chacune des sections étant comme précédemment traversés par un flux magnétique radial, mais cette fois dans des sens opposés, ce qui assure la fermeture du circuit magnétique. Ce circuit magnétique est ainsi réduit exclusivement à la périphérie du rotor 1 et la périphérie du stator 3, et chaque ligne de flux traverse exclusivement deux entrefers utiles 7a et 7b et aucun entrefer nuisible. Les flasques 19 représentés sur la figure 5 sont en matériau non magnétique et ne jouent absolument pas le rôle des flasques précédents.

Dans ce cas naturellement les circuits électriques, tant du rotor que du stator, doivent eux-mêmes être en opposition donc séparés les uns des autres comme il apparaît sur la figure 5 où l'on voit dans la section de gauche des parties conductrices 10a et 11a avec amenée de courant 15a et dans la partie de droite des organes analogues avec l'indice b. Ces deux circuits électriques indépendants peuvent être couplés en série ou en parallèle ou de tout autre manière appropriée. On voit d'autre part sur la figure que cela impose quatre couronnes conductrices 9 réalisant les contacts glissants à raison d'une paire par circuit. Enfin on peut réaliser des ensembles réunissant côte à côte un certain nombre de segments tels que celui de la figure 5 dont les circuits électriques peuvent être couplés en série ou en parallèle selon la technique connue dite « Seg-Mag ».

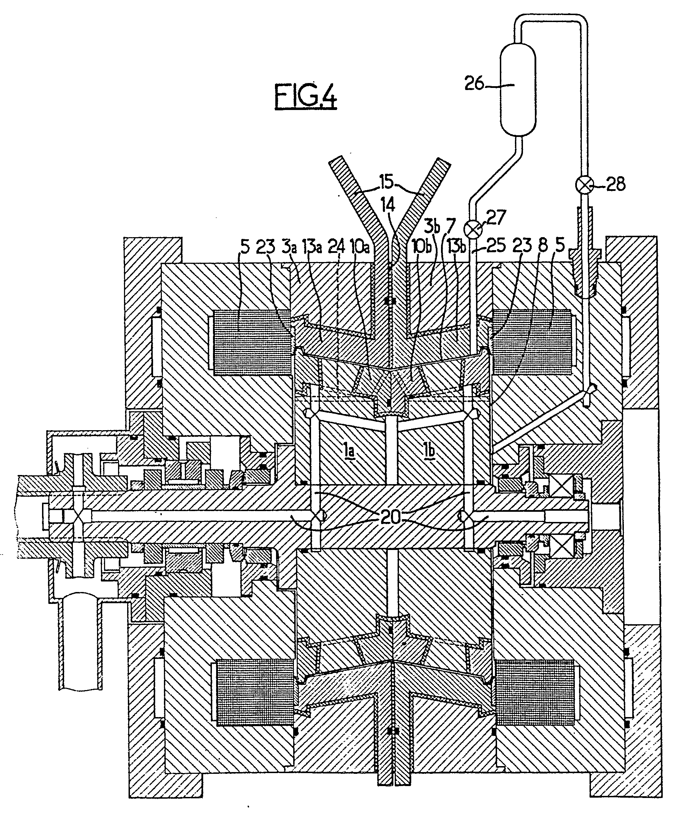

Tout ce qui précède reste valable quelle que soit la technique utilisée pour la constitution des couronnes d'alimentation électrique 9. Cependant dans le cas où on utilise pour cette réalisation la technique des métaux liquides, de plus en plus utilisée, l'invention prévoit un perfectionnement supplémentaire qui apparaît sur la figure 4 et qui consiste à donner à l'entrefer 7 une forme non plus rigoureusement cylindrique mais légèrement rétrécie au centre, avec de préférence une forme symétrique constituée par deux troncs de cône opposés par leur petite base. Sur cette figure on a supposé le circuit électrique réalisé selon la technique des barreaux inclinés. Mais le même perfectionnement serait parfaitement utilisable avec la technique des parois conductrices continues.

On voit sur la figure 4 les deux sections de rotor symétriques 3a et 3b qui présentent le double avantage de permettre l'insertion des conducteurs 15, continus ou composés de bras distincts pour réaliser les conductions extérieures, et de permettre un usinage facile des encoches et le montage ou le moulage des barreaux en deux parties séparées réunies ensuite de part et d'autre de l'isolant 14.

De la même façon le rotor est réalisé en deux sections 1a et 1b symétriques pour d'une part faciliter l'usinage des barreaux inclinés selon la technique des figures 2 ou 3, et d'autre part pour permettre le montage du rotor dans le stator, montage qui serait autrement impossible en raison de la forme indiquée. Naturellement pour permettre ce montage il est nécessaire également que le circuit électrique du rotor soit séparable en deux sections 10a et 10b qui sont moulées chacune séparément sur les sections correspondantes de rotor selon la technique exposée plus haut. Par contre et contrairement aux sections de stator, les deux sections de rotor sont amenées en contact électrique l'une avec l'autre tout en restant isolées de la partie magnétique.

Accessoirement on voit sur la figure que le rotor et son arbre sont percés d'un réseau de conduites 20 pour la circulation d'un fluide de refroidissement selon une technique connue et qui n'est pas davantage explicitée.

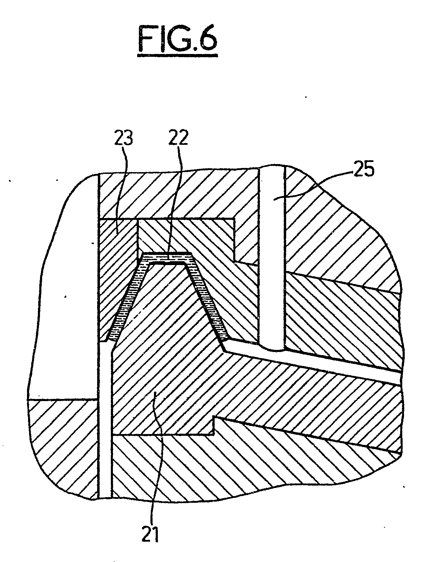

Enfin, conformément à l'invention l'entrefer 7 se termine au voisinage des grandes bases des deux parties coniques par un tracé par exemple trapézoïdal tourné vers l'extérieur et représenté en détail sur la figure 6. On voit ainsi que la couronne conductrice d'extrémité de la pièce conductrice 10a (ou 10b) du rotor se termine à sa périphérie par une nervure trapézoïdale 21 tandis que l'extrémité de la pièce conductrice correspondante 13a (ou 13b) du stator comporte une rainure 22 de profil identique située à faible distance de la précédente. Pour permettre le montage du rotor cette rainure est refermée par une pièce annulaire rapportée 23 visible sur les figures.

On voit ainsi que lorsque le rotor tourne à grande vitesse, la force centrifuge produit l'écoulement de tout liquide présent dans l'entrefer 7 jusque vers les rainures 22. En outre, des canaux 24 sont forés dans chaque section de rotor pour déboucher d'une part dans l'entrefer 8 et d'autre part dans l'entrefer 7, au voisinage du plan de séparation entre les deux sections de rotor comme représenté sur la figure 4. D'autres canaux 25 sont forés dans le stator pour déboucher dans la zone correspondant au bord intérieur de la rainure 22 le plus proche de l'axe.

Grâce à cette disposition la machine selon l'invention peut démarrer par la technique du remplissage total. Pour cela un réservoir 26 et des jeux de vannes 27 et 28 permettent de remplir tout l'espace des entrefers 7 et 8 avec un métal liquide. Etant donné que les pertes par turbulence magnétohydrodynamique sont proportionnelles à la densité du métal liquide, on utilise de préférence un métal léger, à faible point de fusion et à bonne conductibilité électrique, de préférence l'alliage eutectique sodium-potassium. Cet alliage est naturellement stocké dans le réservoir 26 à l'état liquide en présence d'une atmosphère neutre. En ouvrant les vannes 27 et 28 on permet le remplissage total de l'espace 7 et 8 et le retour au réservoir du gaz ainsi chassé par le métal. Après mise en marche de la machine, le métal liquide entraîné en rotation par entraînement moléculaire et également par effet électrique, se trouve centrifugé vers les rainures 22. Le jeu de canalisations permet alors l'évacuation du métal liquide par les conduits 25 tout en assurant le retour des gaz par les canalisations 24 le long de la ligne de partage. L'excès de métal liquide arrivant dans la rainure 22 s'évacue par trop plein dans les canalisations 25 de sorte qu'il ne subsiste plus que la quantité strictement nécessaire pour remplir les rainures 22 et assurer un contact par mouillage localisé des parties conductrices en regard. On élimine ainsi par ce procédé les pertes d'énergie par turbulence dans les entrefers 7 et 8 qui ne sont plus alors occupés que par le gaz neutre. D'autre part, le fonctionnement résulte de la forme même des organes sans nécessiter d'auxiliaires coûteux. Naturellement la même technique serait applicable à des circuits magnétiques segmentaires du type de la figure 5.

**Revendications**

1. Machine homopolaire du type comportant un circuit ferromagnétique avec un entrefer (7) utile sensiblement cylindrique traversé par un flux magnétique radial produit par un bobinage d'excitation (5) approprié incluant une partie conductrice (11) de périphérie de stator et une partie conductrice (10) de périphérie de rotor tournant dans la première, ainsi que des couronnes de contact assurant l'écoulement dans la partie conductrice de rotor de courants parallèles aux génératrices entre les deux couronnes de contact et se refermant sur un circuit extérieur sans enserrer de partie ferromagnétique, machine caractérisée par le fait que la partie conductrice (10) de la périphérie du rotor et la partie conductrice (11) de l'intérieur de la périphérie du stator sont constituées par des barreaux conducteurs distincts (17, 18) réunissant des couronnes continues d'extrémité à la manière d'une cage d'écureuil classique, ces barreaux étant disposés dans des encoches (16, 17, 18) des parties magnétiques correspondantes, ces encoches étant disposées parallèlement aux génératrices pour une des parties, par exemple pour le stator (16), et inclinées hélicoïdalement par rapport aux génératrices pour l'autre des parties, c'est-à-dire le rotor (17, 18) dans le même exemple, ces dernières encoches inclinées et les barreaux correspondants se présentant sous la forme de deux séries (17, 18) d'égales sections globales et d'égales inclinaisons mais de sens d'inclinaison opposés, ces deux séries étant par ailleurs juxtaposées (Fig. 2) ou superposées (Fig. 3).

2. Machine homopolaire selon la revendication 1, et utilisant un métal liquide (22) pour la constitution des couronnes de contact, ladite surface sensiblement cylindrique qui constitue l'entrefer (7) se trouvant rétrécie vers le centre de sa longueur, de préférence sous la forme de deux troncs de cône à faible angle au sommet opposés par leur petite base, l'entrefer se terminant à chaque extrémité de sa longueur axiale par une section à concavité tournée vers l'intérieur, de préférence une section trapézoïdale comprise entre une nervure périphérique (21) du rotor et une rainure correspondante du stator, machine caractérisée par le fait que des jeux de conduites (20, 25) de vannes (27, 28) et de canaux d'intercommunication permettent le démarrage de la machine depuis l'arrêt de la technique du remplissage total en remplissant tout l'espace libre (7) entre le stator et le rotor à l'aide d'un métal liquide, puis, lorsque la vitesse de la machine est suffisante, d'évacuer ce liquide, excepté la quantité remplissant lesdites rainures (22), l'excédent s'écoulant par trop plein centrifuge par des conduites (25) débouchant près du bord intérieur de la rainure le plus proche de l'axe pour chacune de ces rainures.

**Claims**

1. A homopolar machine of the type comprising a ferromagnetic circuit with roughly cylindrical working air gap (7) crossed by a radial magnetic flux produced by a suitable exciter winding including a stator periphery conducting part (11) and a rotor periphery conducting part (10) rotating within the former, along with contact rings providing for flow in the conducting part of the rotor of currents parallel to the generating lines between the two contact rings and being closed in an external circuit without enclosing any ferromagnetic part,
characterized in that the conducting part (10) of the rotor periphery and the conducting part (11) of the inside of the stator periphery are formed by separate conductor bars (17, 18) joining the continuous end rings like a conventional squirrel cage, these bars being placed in slots (16, 17, 18) in the corresponding magnetic parts, these slots being placed parallel to the generating lines for one of the parts, for example for the stator (16), and helically inclined to the generating lines for the other part, i. e. the rotor (17, 18) in the same example, these latter inclined slots and the corresponding bars having the form of two series (17, 18) of equal overall cross-section and equal inclination but with opposite directions of inclination, these two series being furthermore placed side by side (fig. 2) or in overlapping relation (fig. 3).

2. The homopolar machine according to claim 1 and using a liquid metal (22) for forming the contact rings, with the said roughly cylindrical surface which forms the air gap (7) contracting near the middle of its length, preferably in the form of two truncated cones of small vertex angle having their small bases facing, with the air gap terminating at each end of its axial length in a cross-section concave towards the inside, preferably a trapezoidal cross-section included between a peripheral rib (21) on the rotor and a corresponding groove in the stator, characterized in that sets of ducts (20, 25), valves (27, 28) and intercommunicating channels allow the machine to be started from stop with the total filling method filling the whole of the free space (7) between the stator and the rotor with a liquid metal and then, when the speed of the machine is high enough, discharging this liquid, except for the quantity filling the said grooves (22), with the surplus flowing by centrifugal overspill through ducts (25) opening near the inner edge of the groove nearest to the shaft for each of these grooves.

**Ansprüche**

1. Gleichpolmaschine des Typs mit einem ferromagnetischen Kreis mit einem im wesentlichen zylindrischen Nutz-Luftspalt (7), durch den ein von einem geeigneten Erregerspulensystem (5) erzeugter radialer Magnetfluß fließt, der einen leitenden Umfangsteil (11) des Stators und einen leitenden Umfangsteil (10) des im ersteren umlaufenden Rotors, sowie Kontaktkränze umfaßt, die den Abfluß von Parallelströmen im Leiterteil des Rotors an die Generatoren zwischen den zwei Kontaktkränzen sichern und sich in einem äußeren Stromkreis schließen ohne den ferromagnetischen Teil einzuschließen,
diese Maschine dadurch gekennzeichnet, daß der leitende Teil (10) des Rotorumfangs und der leitende Teil (11) des inneren Teils des Statorumfangs aus leitenden Einzelstäben (17, 18) bestehen, die durchgehende Endkränze so verbinden, daß ein herkömmlicher Käfigläufer entsteht, wobei diese Stäbe in Aussparungen (16, 17, 18) der entsprechenden magnetischen Teile angeordnet sind und diese Aussparungen für einen der Teile, z. B. für den Stator (16), parallel zu den Generatoren angeordnet sind, und für den anderen Teil, d. h. im gleichen Beispiel für den Rotor (17, 18) schraubenförmig gegenüber den Generatoren angeordnet sind, wobei sich diese letzteren geneigten Aussparungen und die entsprechenden Stäbe in der Form von zwei Reihen (17, 18) mit gleichem Gesamtquerschnitt und mit gleicher Neigung jedoch gegensinnig geneigt darstellen, wobei diese beiden Reihen im übrigen nebeneinander liegen (Abb. 2) oder sich überlagern (Abb. 3).

2. Gleichpolmaschine gemäß Anspruch 1, die ein Flüssigmetall (22) zum Aufbau der Kontaktkränze benützt, wobei die genannte, im wesentlichen zylindrische Fläche, die den Luftspalt (7) darstellt, gegen die Mitte ihrer Länge eingeschnürt ist, vorzugsweise in der Form von zwei Kegelstümpfen mit spitzem Scheitelwinkel, die sich mit ihrer kleineren Fläche gegenüberliegen, wobei der Luftspalt an jedem Ende seiner Länge in Axialrichtung in einem nach innen gewandten konkaven Querschnitt endet, vorzugsweise mit einem trapezförmigen Querschnitt zwischen einer Umfangsrippe (21) des Rotors und einer entsprechenden Nut des Stators, wobei die Maschine dadurch gekennzeichnet ist, daß Spiele der Leitungen (20, 25), der Schieber (27, 28) und der Verbindungskanäle das Anlassen der Maschine ermöglichen nach Abschluß des Vorgangs zum vollständigen Füllen durch Füllen des gesamten Freiraums (7) zwischen dem Stator und dem Rotor mit Hilfe eines Flüssigmetalls, dann, sobald die Geschwindigkeit der Maschine ausreichend ist, Ablassen dieser Flüssigkeit mit Ausnahme der Menge, die die genannten Nute (22) füllt, wobei der übervolle Überschuß für jede dieser Nute durch die Zentrifugalkraft jeweils durch die Leitungen (25) abfließt, die am inneren Rand der der Achse zunächstliegenden Nut mündet.

# FIG.1

# FIG.2

# FIG.3

# FIG.4

# FIG.5

# FIG.6